# EUROPEAN PATENT APPLICATION

(11) **EP 1 840 742 A2**
(43) Date of publication of application: **03.10.2007**
(21) Application number: 07251416.9
(22) Date of filing: 30.03.2007
(51) Int. Cl.: G06F 9/46, G06F 15/163, G06F 15/80

(54) **Method and apparatus for operating a computer processor array**

(30) Priority: 31.03.2006 US 788265 P
(71) Applicant: Technology Properties Limited, Cupertino CA 95014 (US)
(72) Inventor: Moore, Charles H., Sierra City California 96125 (US); Fox, Jeffrey Arthur, Berkeley California 94710 (US); Rible, John W., Santa Cruz California 95060-4215 (US)
(74) Representative: Beresford, Keith Denis Lewis

(57) **Abstract**

A computer array (10) has a plurality of computers (12) for accomplishing a larger task that is divided into smaller tasks, each of the smaller tasks being assigned to one or more of the computers (12). Each of the computers (12) may be configured for specific functions and individual input/output circuits (26) associated with exterior computers (12) are specifically adapted for particular input/output functions. An example of 24 computers (12) arranged in the computer array (10) has a centralized computational core (34) with the computers (12) nearer the edge of the die (14) being configured for input and/or output. Mechanisms are described for communications between computers (12) and the outside environment.

## Description

### BACKGROUND OF THE INVENTION

### RELATED APPLICATIONS

This application claims the benefit of provisional U.S. Application Serial No. 60/788,265 filed on March 31, 2006 entitled Allocation Of Resources Among An Array Of Computers by at least one common inventor which is incorporated herein by reference in its entirety.

### Field of the Invention

The present invention relates to the field of computers and computer processors, and more particularly to a-method and means for a unique type of interaction between computers. The predominant current usage of the present inventive computer array is in the combination of multiple computers on a single microchip. With yet greater particularity the present invention relates to the field of computers and computer processors, and more particularly to a method and means for a more efficient use of a stack within a stack computer processor.

### Description of the Background Art

It is known in the prior art to use multiple computer processors, working together, to accomplish a task. Multi-threading and several other schemes have been used to allow processors to cooperate. However, it is generally recognized that there is much room for improvement in this area. Furthermore, it is a trend now to combine several processors on a single chip, thereby exacerbating the problem and increasing the urgency to find a solution for causing computers to work together in an efficient manner. Now it is thought that, for a number of reasons, the best arrangement of multiple processors for many applications might be an array consisting of many computers, each having processing capabilities and at least some dedicated memory. In such an example, the computers will each not be particularly powerful in its own right, but rather the computing power will be achieved through close cooperation of the computers.

Co-pending applications have described and claimed a number of inventive aspects of such computer arrays, including some specifics as to how such computers may be arranged, and how communications channels between them might occur. However, implementation of the relatively new concept of computer arrays will require yet more innovations in order to operate with the greatest efficiency.

Clearly there any many questions to be answered regarding how best to arrange, communicate between, divide tasks among, and otherwise use computer arrays. Some of these questions may have been answered, but there may well be room for improvement even over the existing solutions. In other cases, solutions may require addressing questions of first impression in order to solve new problems that did not exist in the prior art.

Stack machines offer processor complexity that is much lower than that of Complex Instruction Set Computers (CISCs), and overall system complexity that is lower than that of either Reduced Instruction Set Computers (RICSs) or CISC machines. They do this without requiring complicated compilers or cache control hardware for good performance. They also attain competitive raw performance, and superior performance for a given price in most programming environments. Their first successful application area has been in real time embedded control environments, where they outperform other system design approaches by a wide margin. Where previously the stacks were kept mostly in program memory, newer stack machines maintain separate memory chips or even an area of on-chip memory for the stacks. These stack machines provide extremely fast subroutine calling capability and superior performance for interrupt handling and task switching.

Zahir, et al. (USPN 6,367,005) disclose a register stack engine, which saves to memory sufficient registers of a register stack to provide more available registers in the event of stack overflow. The register stack engine also stalls the microprocessor until the engine can restore an appropriate number of registers in the event of stack underflow.

Story (USPN 6,219,685) discloses a method of comparing the results of an operation with a threshold value. However, this approach does not distinguish between results that are rounded down to the threshold value (which would raise an overflow exception) and results that just happen to equal the threshold value. Another method disclosed by Story reads and writes hardware flags to identify overflow or underflow conditions.

With a stack in memory, an overflow or underflow would overwrite a stack item or use a stack item that was not intended to be part of the stack. A need exists for an improved method of reducing or eliminating overflow and underflow within a stack.

Forth systems have been able to have more than one "thread" of code executing at one time, often called a cooperative round-robin. The order in which the threads get a turn using the central processing unit (CPU) is fixed; for example, thread 4 always gets its turn after thread 3 and before thread 5. Each thread is allowed to keep the CPU as long as it wants to, then relinquishes it voluntarily. The thread does this by calling the word PAUSE. Only a few data items need to be saved during a PAUSE function in order for the original task to be restored, whereas large contexts need to be saved during an interrupt function.

Each thread may or may not have work to do. If task 4 has work to do and the task before it in the round-robin (task 3) calls PAUSE, then task 4 will wake up and work until it decides to PAUSE again. If task 4 has no work to do, it passes control on to task 5. When a task calls a word which will perform an input/output function, and will therefore need to wait for the input/output to finish, a PAUSE is built into the input/output call.

The predictability of PAUSE allows for very efficient code. Frequently, a Forth based cooperative round-robin can give every thread it has a turn at the CPU in less time than it would take a pre-emptive multitasker to decide who should get the CPU next.

However, a particular task may tend to overwhelm or overtake the CPU. In addition, it would be advantageous to expand the PAUSE function beyond one CPU.

### SUMMARY

Briefly, the present invention includes an array of computers, each computer having its own memory and being capable of independent computational functions. In order to accomplish tasks cooperatively, the computers must pass data and/or instructions from one to another. One possible configuration is one where, the computers have connecting data paths between orthogonally adjacent computers such that each computer can communicate directly with as many as four "neighbors". If it is desired for a computer to communicate with another that is not an immediate neighbor, then communications will be channeled through other computers to the desired destination.

Since, according to the described environment, data words containing as many as four instructions can be passed in parallel, both between computers and also to and from the internal memories of each computer, one type of a mini-program in a single data word will be referred to herein as micro-loops. It should be remembered that in a large array of processors large tasks are ideally divided into a plurality of smaller tasks, each of which smaller tasks can readily be accomplished by a processor with somewhat limited capabilities. Therefore, it is thought that four instruction loops will be quite useful. This fact is made even more noticeable by the associated fact that, since the computers do have limited facilities, it will be expedient for them, from time to time, to "borrow" facilities from a neighbor. This will present an ideal opportunity for the use of the micro-loops. While a computer might need to borrow processing power, or the like, from a neighbor, another likely possibility is that it may need to borrow some memory from a neighbor, using it in a manner somewhat similar to its own internal memory. By passing a micro-loop to a neighbor instructing it to read or write a series of data, such memory borrowing can be readily accomplished. Such a micro loop might contain, for example, an instruction to write from a particular internal memory location, increment that location, and then repeat for a given number of iterations. A micro loop since it is a single word cannot perform an instruction memory fetch more than once.

The above example of passing a micro-loop to a neighbor is an example of yet another aspect of the invention, which is presently being referred to as "Forthlets" because they are presently implemented in the Forth computer language - although the application of the invention is not limited strictly to use with Forth. A Forthlet is a mini-program that can be transmitted directly to a computer for execution. In contrast with a micro-loop it may be more than one word and can perform multiple memory fetches. In prior art computers, an instruction must be read and stored before execution but, as will be seen in light of the detailed description herein, that is not necessary according to the present invention. Indeed, it is anticipated that an important aspect of the invention will be that a computer can generate a Forthlet and pass it off to another computer for execution. Forthlets can be "pre-written" by a programmer and stored for use. Indeed, Forthlets can be accumulated into a "library" for use as needed. However, it is also within the scope of the invention that Forthlets can be generated, according to preprogrammed criteria, within a computer.

By way of example, in an embodiment of the invention, I/O registers are treated as memory addresses which means that the same (or similar) instructions that read and write memory can also perform I/O operations. In the case of multi-core chips, there is a powerful ramification of this choice for I/O structure. Not only can the core processor read and execute instructions from its local ROM and RAM, it can also read and execute instructions presented to it on I/O ports or registers. Now the concept of tight loops transferring data becomes incredibly powerful. It allows instruction streams to be presented to the cores at I/O ports and executed directly from them. Therefore, one core can send a code object to an adjoining core processor which can execute it directly. Code objects can now be passed among the cores, which execute them at the registers. The code objects arrive at a very high-speed since each core is essentially working entirely within its own local address space with no apparent time spent transferring code instructions.

As discussed above, each instruction fetch brings a plurality (four in the presently described embodiment) of instructions into the core processor. Although this sort of built-in "cache" is certainly small, it is extremely effective when the instructions themselves take advantage of it. For instance, micro for - next loops can be constructed that are contained entirely within the bounds of a single 18-bit instruction word. These types of constructs are ideal when combined with the automatic status signaling built into the I/O registers because that means large blocks of data can be transferred with only a single instruction fetch. And with this sort of instruction packing, the concept of executing instructions being presented on a shared I/O register from a neighboring processor core takes on new power because now each word appearing in that register represents not one, but four instructions. These types of software / hardware structures and their staggering impact on performance in multi-core chips are simply not available to traditional languages - they are only possible in an instruction set where multiple instructions are packed within a single word and complete loops can be executed from within that word.

The device described herein, in which a conventional data and return stack are replaced by an array of registers which function in a circular, repeating pattern. A data stack comprises a T register, an S register, and eight hardwired registers which are electrically interconnected in an alternating pattern. These eight hardwired registers are interconnected in such a way as to function in a circular repeating pattern. This configuration prevents reading from outside of the stack, and prevents reading an unintended empty register value.

Similar to the data stack, a return stack includes a R register, and eight hardwired registers which are electrically interconnected in an alternating pattern. These eight hardwired registers are interconnected in such a way as to function in a circular repeating pattern. This configuration prevents reading from outside of the stack, and prevents reading an unintended empty register value.

The above described dual stack processor can function as an independently functioning processor, or it can be used with several other like or different processors in an interconnected computer array.

The present invention will become clear to those skilled in the art in view of the description of modes of carrying out the invention, and the industrial applicability thereof, as described herein and as illustrated in the several figures of the drawing. The objects and advantages listed are not an exhaustive list of all possible advantages of the invention. Moreover, it will be possible to practice the invention even where one or more of the intended objects and/or advantages might be absent or not required in the application.

Further, those skilled in the art will recognize that various embodiments of the present invention may achieve one or more, but not necessarily all, of the described objects and/or advantages. Accordingly, the objects and/or advantages described herein are not essential elements of the present invention, and should not be construed as limitations.

### BRIEF DESCRIPTION OF THE DRAWINGS

Fig. 1 is a diagrammatic view of a computer array, according to the present invention;
Fig. 2 is a detailed diagram showing a subset of the computers of Fig. 1 and a more detailed view of the interconnecting data buses of Fig. 1;
Fig. 3 is a block diagram depicting a general layout of one of the computers of Figs. 1 and 2;
Fig. 4 is a diagrammatic representation of an instruction word 48.
Fig. 5 is a schematic representation of the slot sequencer 42 of Fig. 3.
Fig. 6 is a flow diagram depicting an example of a micro-loop according to the present invention;
Fig. 7 is a flow diagram depicting an example of the inventive method for executing instructions from a port; and
Fig. 8 is a flow diagram depicting an example of the inventive improved method for alerting a computer.
Fig. 9 illustrates the operation of computers 12f and 12g

### DETAILED DESCRIPTION OF THE DRAWINGS

A method of practicing the invention is described in the following description with reference to the Figures, in which like numbers represent the same or similar elements. While this invention is described in terms of modes for achieving this invention's objectives, it will be appreciated by those skilled in the art that variations may be accomplished in view of these teachings without deviating from the spirit or scope of the present invention.

The embodiments and variations of the invention described herein, and/or shown in the drawings, are presented by way of example only and are not limiting as to the scope of the invention. Unless otherwise specifically stated, individual aspects and components of the invention may be omitted or modified, or may have substituted therefore known equivalents, or as yet unknown substitutes such as may be developed in the future or such as may be found to be acceptable substitutes in the future. The invention may also be modified for a variety of applications while remaining within the spirit and scope of the claimed invention, since the range of potential applications is great, and since it is intended that the present invention be adaptable to many such variations.

While the following embodiment is described using an example of a computer array having both asynchronous communications between computers and individually asynchronously operating computers, the applications of the present invention are, by no means, limited to that context.

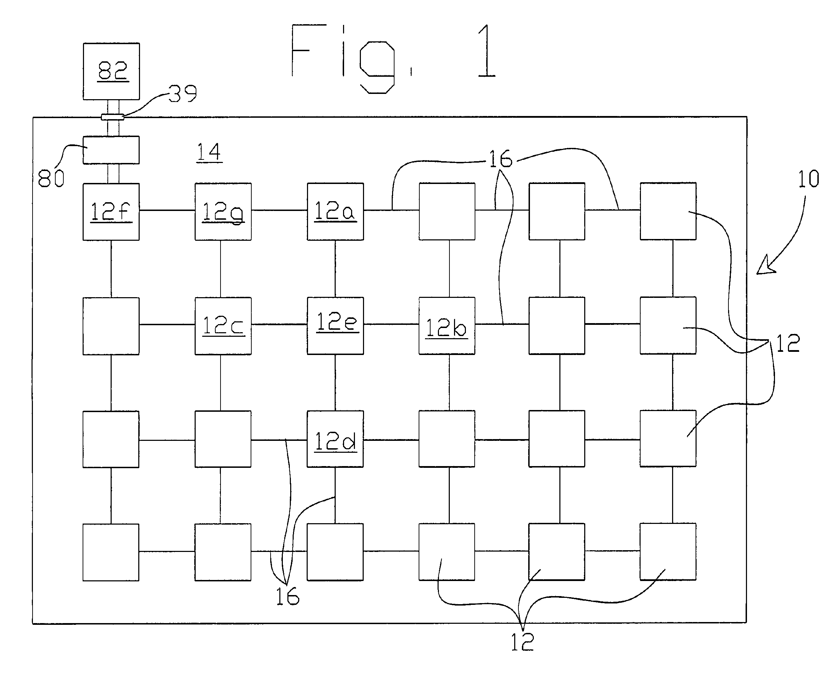

The invention includes an array of individual computers. The inventive computer array is depicted in a diagrammatic view in Fig. 1 and is designated therein by the general reference character 10. The computer array 10 has a plurality (twenty four in the example shown) of computers 12 (sometimes also referred to as "cores" or "nodes" in the example of an array). In the example shown, all of the computers 12 are located on a single die 14. Each of the computers 12 is a generally independently functioning computer, as will be discussed in more detail hereinafter. The computers 12 are interconnected by a plurality (the quantities of which will be discussed in more detail hereinafter) of interconnecting data buses 16. In this example, the data buses 16 are bidirectional asynchronous high speed parallel data buses, although it is within the scope of the invention that other interconnecting means might be employed for the purpose. In the present embodiment of the array 10, not only is data communication between the computers 12 asynchronous, the individual computers 12 also operate in an internally asynchronous mode. This has been found by the inventor to provide important advantages. For example, since a clock signal does not have to be distributed throughout the computer array 10, a great deal of power is saved. Furthermore, not having to distribute a clock signal eliminates many timing problems that could limit the size of the array 10 or cause other known difficulties. The array of 24 computers is not a limitation and it is expected that the numbers of computers will increase as chip fabrication becomes more sophisticated indeed scalability is a principle of this configuration.

One skilled in the art will recognize that there will be additional components on the die 14 that are omitted from the view of Fig. 1 for the sake of clarity. Such additional components include power buses, external connection pads, and other such common aspects of a microprocessor chip.

Computer 12e is an example of one of the computers 12 that is not on the periphery of the array 10. That is, computer 12e has four orthogonally adjacent computers 12a, 12b, 12c and 12d. This grouping of computers 12a through 12e will be used hereinafter in relation to a more detailed discussion of the communications between the computers 12 of the array 10. As can be seen in the view of Fig. 1, interior computers such as computer 12e will have four other computers 12 with which they can directly communicate via the buses 16. In the following discussion, the principles discussed will apply to all of the computers 12 except that the computers 12 on the periphery of the array 10 will be in direct communication with only three or, in the case of the corner computers 12, only two other of the computers 12.

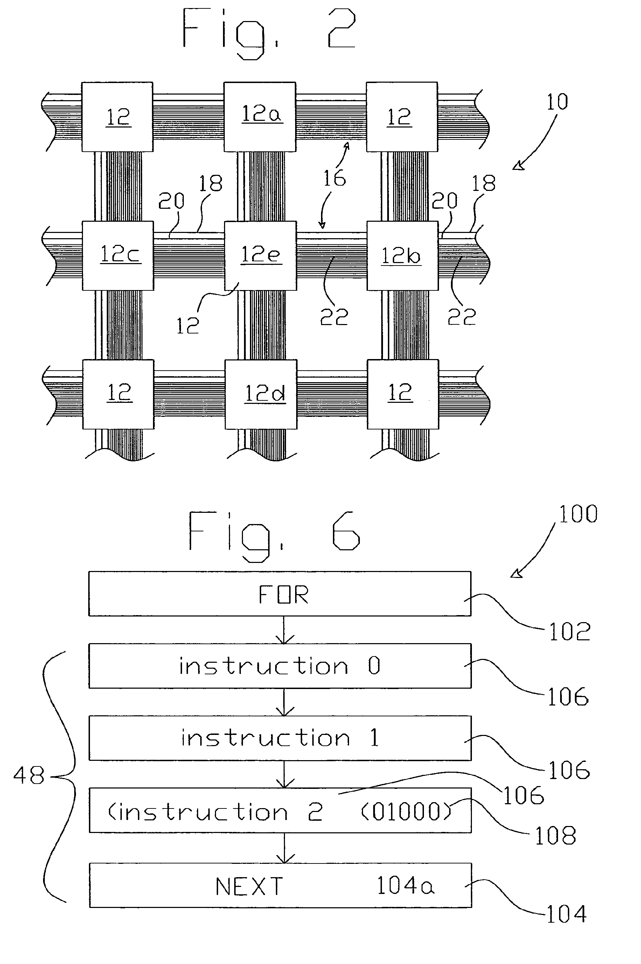

Fig. 2 is a more detailed view of a portion of Fig. 1 showing only some of the computers 12 and, in particular, computers 12a through 12e, inclusive. The view of Fig. 2 also reveals that the data buses 16 each have a read line 18, a write line 20 and a plurality (eighteen, in this example) of data lines 22. The data lines 22 are capable of transferring all the bits of one eighteen-bit instruction word generally simultaneously in parallel. It should be noted that, in one embodiment of the invention, some of the computers 12 are mirror images of adjacent computers. However, whether the computers 12 are all oriented identically or as mirror images of adjacent computers is not an aspect of this presently described invention. Therefore, in order to better describe this invention, this potential complication will not be discussed further herein.

According to the present inventive method, a computer 12, such as the computer 12e can set one, two, three or all four of its read lines 18 such that it is prepared to receive data from the respective one, two, three or all four adjacent computers 12. Similarly, it is also possible for a computer 12 to set one, two, three or all four of its write lines 20 high. Although this description does not describe to setting more than one of a computer's 12 write lines 20 high at one time, doing so is not beyond the scope of this invention, as it is conceivable that a use for such an operation may occur, if fact there are several occasions where this is desirable, such as writing to multi-port addresses.

When one of the adjacent computers 12a, 12b, 12c or 12d sets a write line 20 between itself and the computer 12e high, if the computer 12e has already set the corresponding read line 18 high, then a word is transferred from that computer 12a, 12b, 12c or 12d to the computer 12e on the associated data lines 22. Then the sending computer 12 will release the write line 20 and the receiving computer (12e in this example) pulls both the write line 20 and the read line 18 low. The latter action will acknowledge to the sending computer 12 that the data has been received. Note that the above description is not intended necessarily to denote the sequence of events in order. In actual practice, in this example the receiving computer may try to set the write line 20 low slightly before the sending computer 12 releases (stops pulling high) its write line 20. In such an instance, as soon as the sending computer 12 releases its write line 20 the write line 20 will be pulled low by the receiving computer 12e.

In the present example, only a programming error would cause both computers 12 on the opposite ends of one of the buses 16 to try to set high the read line 18 there-between. Also, it would be error for both computers 12 on the opposite ends of one of the buses 16 to try to set high the write line 18 there-between at the same time. Similarly, as discussed above, it is not currently anticipated that it would be desirable to have a single computer 12 set more than one of its four write lines 20 high. However, it is presently anticipated that there will be occasions wherein it is desirable to set different combinations of the read lines 18 high such that one of the computers 12 can be in a wait state awaiting data from the first one of the chosen computers 12 to set its corresponding write line 20 high.

In the example discussed above, computer 12e was described as setting one or more of its read lines 18 high before an adjacent computer (selected from one or more of the computers 12a, 12b, 12c or 12d) has set its write line 20 high. However, this process can certainly occur in the opposite order. For example, if the computer 12e were attempting to write to the computer 12a, then computer 12e would set the write line 20 between computer 12e and computer 12a to high. If the read line 18 between computer 12e and computer 12a has then not already been set to high by computer 12a, then computer 12e will simply wait until computer 12a does set that read line 20 high. Then, as discussed above, when both of a corresponding pair of write line 18 and read line 20 are high the data waiting to be transferred on the data lines 22 is transferred. Thereafter, the receiving computer 12 (computer 12a, in this example) sets both the read line 18 and the write line 20 between the two computers (12e and 12a in this example) to low as soon as the sending computer 12e releases it.

Whenever a computer 12 such as the computer 12e has set one of its write lines 20 high in anticipation of writing it will simply wait, using essentially no power, until the data is "requested", as described above, from the appropriate adjacent computer 12, unless the computer 12 to which the data is to be sent has already set its read line 18 high, in which case the data is transmitted immediately. Similarly, whenever a computer 12 has set one or more of its read lines 18 to high in anticipation of reading it will simply wait, using essentially no power, until the write line 20 connected to a selected computer 12 goes high to transfer an instruction word between the two computers 12.

There may be several potential means and/or methods to cause the computers 12 to function as described above. However, in this present example, the computers 12 so behave simply because they are operating generally asynchronously internally (in addition to transferring data there-between in the asynchronous manner described). That is, instructions are completed sequentially. When either a write or read instruction occurs, there can be no further action until that instruction is completed (or, perhaps alternatively, until it is aborted, as by a "reset" or the like). There is no regular clock pulse, in the prior art sense. Rather, a pulse is generated to accomplish a next instruction only when the instruction being executed either is not a read or write type instruction (given that a read or write type instruction would require completion by another entity) or else when the read or write type operation is, in fact, completed.

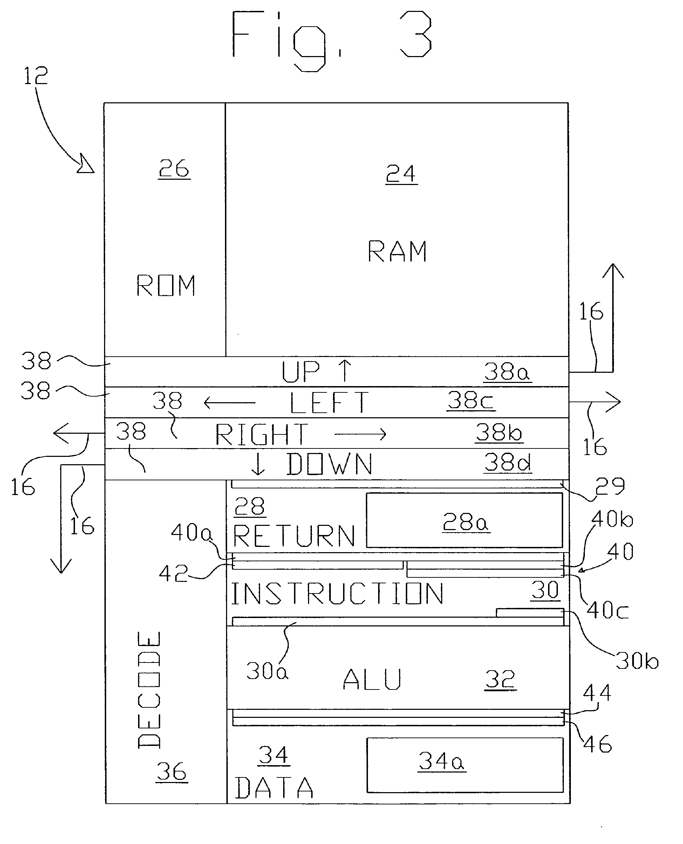

Fig. 3 is a block diagram depicting the general layout of an example of one of the computers 12 of Figs. 1 and 2. As can be seen in the view of Fig. 3, each of the computers 12 is a generally self contained computer having its own RAM 24 and ROM 26. As mentioned previously, the computers 12 are also sometimes referred to as individual "cores", given that they are, in the present example, combined on a single chip.

Other basic components of the computer 12 are a return stack 28, an instruction area 30, an arithmetic logic unit ("ALU") 32, a data stack 34 and a decode logic section 36 for decoding instructions. One skilled in the art will be generally familiar with the operation of stack based computers such as the computers 12 of this present example. The computers 12 are dual stack computers having the data stack 34 and separate return stack 28.

In this embodiment of the invention, the computer 12 has four communication ports 38 for communicating with adjacent computers 12. The communication ports 38 are tri-state drivers, having an off status, a receive status (for driving signals into the computer 12) and a send status (for driving signals out of the computer 12) Of course, if the particular computer 12 is not on the interior of the array (Fig. 1) such as the example of computer 12e, then one or more of the communication ports will not be used in that particular computer, at least for the purposes described herein. Those communication ports 38 that do abut the edge of the die can have additional circuitry, either designed into such computer 12 or else external to the computer 12 but associated therewith, to cause such communication port 38 to act as an external I/O port 39 (Fig. 1). Examples of such external I/O ports 39 include, but are not limited to, USB (universal serial bus) ports, RS232 serial bus ports, parallel communications ports, analog to digital and/or digital to analog conversion ports, and many other possible variations. In Fig. 1, an "edge" computer 12f is depicted with associated interface circuitry 80 for communicating through an external I/O port 39 with an external device 82. The instruction area 30 includes a number of registers 40 including, in this example, an A register 40a, a B register 40b and a P register 40c. In this example, the A register 40a is a full eighteen-bit register, while the B register 40b and the P register 40c are nine-bit registers.

To ensure the accuracy of computed results, a processor checks each operation to determine whether it raised an exception condition. For example, arithmetic operations are subject to overflow and underflow exceptions. An overflow exception arises when a calculated number is larger than the largest number that can be represented in the format specified for the number. An underflow exception arises when a calculated number is smaller than the smallest number that can be represented in the format specified for the number (IEEE 754-1985 Standard for Binary Arithmetic Operations).

The present invention discloses a stack computer processor in which the stack comprises an array of interconnected registers, which function in a circular pattern. The data stack and return stack are not arrays in memory accessed by a stack pointer, as in many prior art computers.

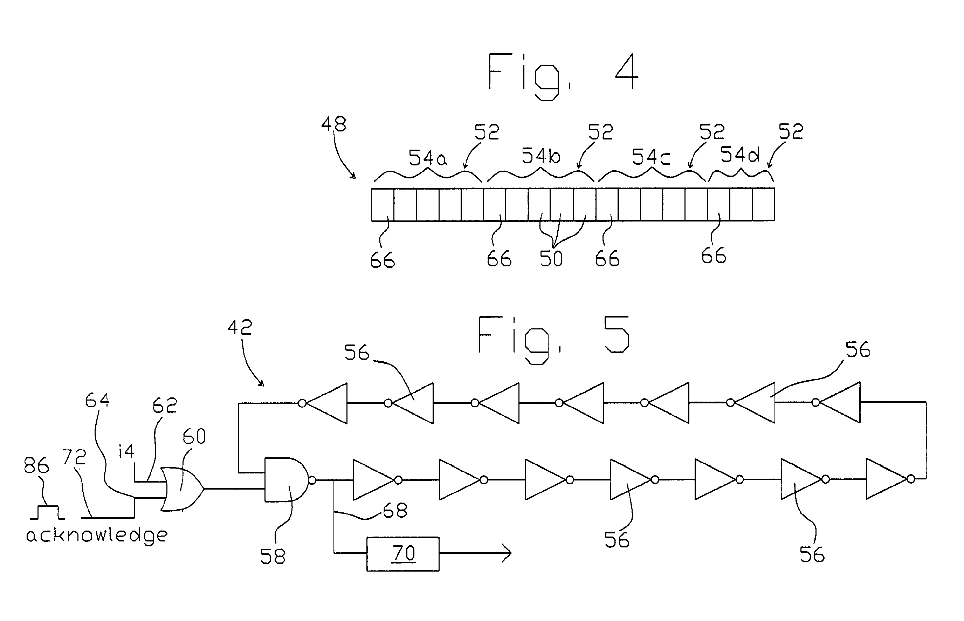

Fig. 4 is a diagrammatic representation of an instruction word 48. (It should be noted that the instruction word 48 can actually contain instructions, data, or some combination thereof.) The instruction word 48 consists of eighteen bits 50. This being a binary computer, each of the bits 50 will be a '1' or a '0'. As previously discussed herein, the eighteen-bit wide instruction word 48 can contain up to four instructions 52 in four slots 54 called slot zero 54a, slot one 54b, slot two 54c and slot three 54d. In the present embodiment of the invention, the eighteen-bit instruction words 48 are always read as a whole. Therefore, since there is always a potential of having up to four instructions in the instruction word 48, a no-op (no operation) instruction is included in the instruction set of the computer 12 to provide for instances when using all of the available slots 54 might be unnecessary or even undesirable. It should be noted that, according to one particular embodiment of the invention, the polarity (active high as compared to active low) of bits 50 in alternate slots (specifically, slots one 54b and three 54c) is reversed. However, this is not a necessary aspect of the presently described invention and, therefore, in order to better explain this invention this potential complication is avoided in the following discussion.

Fig.5 is a schematic representation of the slot sequencer 42 of Fig. 3. As can be seen in the view of Fig. 5, the slot sequencer 42 has a plurality (fourteen in this example) of inverters 56 and one NAND gate 58 arranged in a ring, such that a signal is inverted an odd number of times as it travels through the fourteen inverters 56 and the NAND gate 58. A signal is initiated in the slot sequencer 42 when either of the two inputs to an OR gate 60 goes high. A first OR gate input 62 is derived from a bit i4 66 (Fig. 4) of the instruction 52 being executed. If bit i4 is high then that particular instruction 52 is an ALU instruction, and the i4 bit 66 is '1'. When the i4 bit is '1', then the first OR gate input 62 is high, and the slot sequencer 42 is triggered to initiate a pulse that will cause the execution of the next instruction 52.

When the slot sequencer 42 is triggered, either by the first OR gate input 62 going high or by the second OR gate input 64 going high (as will be discussed hereinafter), then a signal will travel around the slot sequencer 42 twice, producing an output at a slot sequencer output 68 each time. The first time the signal passes the slot sequencer output 68 it will be low, and the second time the output at the slot sequencer output 68 will be high. The relatively wide output from the slot sequencer output 68 is provided to a pulse generator 70 (shown in block diagrammatic form) that produces a narrow timing pulse as an output. One skilled in the art will recognize that the narrow timing pulse is desirable to accurately initiate the operations of the computer 12.

When the particular instruction 52 being executed is a read or a write instruction, or any other instruction wherein it is not desired that the instruction 52 being executed triggers immediate execution of the next instruction 52 in sequence, then the i4 bit 66 is '0' (low) and the first OR gate input 62 is, therefore, also low. One skilled in the art will recognize that the timing of events in a device such as the computers 12 is generally quite critical, and this is no exception. Upon examination of the slot sequencer 42 one skilled in the art will recognize that the output from the OR gate 60 must remain high until after the signal has circulated past the NAND gate 58 in order to initiate the second "lap" of the ring. Thereafter, the output from the OR gate 60 will go low during that second "lap" in order to prevent unwanted continued oscillation of the circuit.

As can be appreciated in light of the above discussion, when the i4 bit 66 is '0', then the slot sequencer 42 will not be triggered - assuming that the second OR gate input 66, which will be discussed hereinafter, is not high.

As discussed, above, the i4 bit 66 of each instruction 52 is set according to whether or not that instruction is a read or write type of instruction. The remaining bits 50 in the instruction 52 provide the remainder of the particular opcode for that instruction. In the case of a read or write type instruction, one or more of the bits may be used to indicate where data is to be read from or written to in that particular computer 12. In the present example of the invention, data to be written always comes from the T register 44 (the top of the data stack 34), however data can be selectively read into either the T register 44 or else the instruction area 30 from where it can be executed. That is because, in this particular embodiment of the invention, either data or instructions can be communicated in the manner described herein and instructions can, therefore, be executed directly from the data bus 16, although this is not a necessary aspect of this present invention. Furthermore, one or more of the bits 50 will be used to indicate which of the ports 38, if any, is to be set to read or write. This later operation is optionally accomplished by using one or more bits to designate a register 40, such as the A register 40a, the B register, or the like. In such an example, the designated register 40 will be preloaded with data having a bit corresponding to each of the ports 38 (and, also, any other potential entity with which the computer 12 may be attempting to communicate, such as memory, an external communications port, or the like.) For example, each of four bits in the particular register 40 can correspond to each of the up port 38a, the right port 38b, the left port 38c or the down port 38d. In such case, where there is a '1' at any of those bit locations, communication will be set to proceed through the corresponding port 38. As previously discussed herein, in the present embodiment of the invention it is anticipated that a read opcode might set more than one port 38 for communication in a single instruction while, although it is possible, it is not anticipated that a write opcode will set more than one port 38 for communication in a single instruction.

The immediately following example will assume a communication wherein computer 12e is attempting to write to computer 12c, although the example is applicable to communication between any adjacent computers 12. When a write instruction is executed in a writing computer 12e, the selected write line 20 (in this example, the write line 20 between computers 12e and 12c) is set high, if the corresponding read line 18 is already high then data is immediately sent from the selected location through the selected communications port 38. Alternatively, if the corresponding read line 18 is not already high, then computer 12e will simply stop operation until the corresponding read line 18 does go high. The mechanism for stopping (or, more accurately, not enabling further operations of) the computer 12a when there is a read or write type instruction has been discussed previously herein. In short, the opcode of the instruction 52 will have a '0' at bit position i4 66, and so the first OR gate input 62 of the OR gate 60 is low, and so the slot sequencer 42 is not triggered to generate an enabling pulse.

As for how the operation of the computer 12e is resumed when a read or write type instruction is completed, the mechanism for that is as follows: When both the read line 18 and the corresponding write line 20 between computers 12e and 12c are high, then both lines 18 and 20 will be released by each of the respective computers 12 that is holding it high. (In this example, the sending computer 12e will be holding the write line 18 high while the receiving computer 12c will be holding the read line 20 high). Then the receiving computer 12c will pull both lines 18 and 20 low. In actual practice, the receiving computer 12c may attempt to pull the lines 18 and 20 low before the sending computer 12e has released the write line 18. However, since the lines 18 and 20 are pulled high and only weakly held (latched) low, any attempt to pull a line 18 or 20 low will not actually succeed until that line 18 or 20 is released by the computer 12 that is latching it-high.

When both lines 18 and 20 in a data bus 16 are pulled low, this is an "acknowledge" condition. Each of the computers 12e and 12c will, upon the acknowledge condition, set its own internal acknowledge line 72 high. As can be seen in the view of Fig. 5, the acknowledge line 72 provides the second OR gate input 64. Since an input to either of the OR gate 60 inputs 62 or 64 will cause the output of the OR gate 60 to go high, this will initiate operation of the slot sequencer 42 in the manner previously described herein, such that the instruction 52 in the next slot 54 of the instruction word 48 will be executed. The acknowledge line 72 stays high until the next instruction 52 is decoded, in order to prevent spurious addresses from reaching the address bus.

In any case when the instruction 52 being executed is in the slot three position of the instruction word 48, the computer 12 will fetch the next awaiting eighteen-bit instruction word 48 unless, of course, bit i4 66 is a '0'. In actual practice, the present inventive mechanism includes a method and apparatus for "prefetching" instructions such that the fetch can begin before the end of the execution of all instructions 52 in the instruction word 48. However, this also is not a necessary aspect of the present inventive method and apparatus for asynchronous data communications.

The above example wherein computer 12e is writing to computer 12c has been described in detail. As can be appreciated in light of the above discussion, the operations are essentially the same whether computer 12e attempts to write to computer 12c first, or whether computer 12c first attempts to read from computer 12e. The operation cannot be completed until both computers 12 and 12c are ready and, whichever computer 12e or 12c is ready first, that first computer 12 simply "goes to sleep" until the other computer 12e or 12c completes the transfer. Another way of looking at the above described process is that, actually, both the writing computer 12e and the receiving computer 12c go to sleep when they execute the write and read instructions, respectively, but the last one to enter into the transaction reawakens nearly instantaneously when both the read line 18 and the write line 20 are high, whereas the first computer 12 to initiate the transaction can stay asleep nearly indefinitely until the second computer 12 is ready to complete the process.

A method for enabling efficient asynchronous communications between devices is some sort of acknowledge signal or condition. This method, as described herein, provides the necessary acknowledge condition that allows, or at least makes practical, asynchronous communications between the devices. Furthermore, the acknowledge condition also makes it possible for one or more of the devices to "go to sleep" until the acknowledge condition occurs. Of course, an acknowledge condition could be communicated between the computers 12 by a separate signal being sent between the computers 12 (either over the interconnecting data bus 16 or over a separate signal line), and such an acknowledge signal would be within the scope of this aspect of the present invention. However, according to the embodiment of the invention described herein, it can be appreciated that there is even more economy involved here, in that the method for acknowledgement does not require any additional signal, clock cycle, timing pulse, or any such resource beyond that described, to actually affect the communication.

Various modifications may be made to the invention without altering its value or scope. For example, while this invention has been described herein in terms of read instructions and write instructions, in actual practice there may be more than one read type instruction and/or more than one write type instruction. As just one example, in one embodiment of the invention there is a write instruction that increments the register and other write instructions that do not. Similarly, write instructions can vary according to which register 40 is used to select communications ports 38, or the like, as discussed previously herein. There can also be a number of different read instructions, depending only upon which variations the designer of the computers 12 deems to be a useful choice of alternative read behaviors.

Similarly, while the present invention has been described herein in relation to communications between computers 12 in an array 10 on a single die 14, the same principles and method can be used, or modified for use, to accomplish other inter-device communications, such as communications between a computer 12 and its dedicated memory or between a computer 12 in an array 10 and an external device (through an input/output port, or the like). Indeed, it is anticipated that some applications may require arrays of arrays - with the presently described inter device communication method being potentially applied to communication among the arrays of arrays.

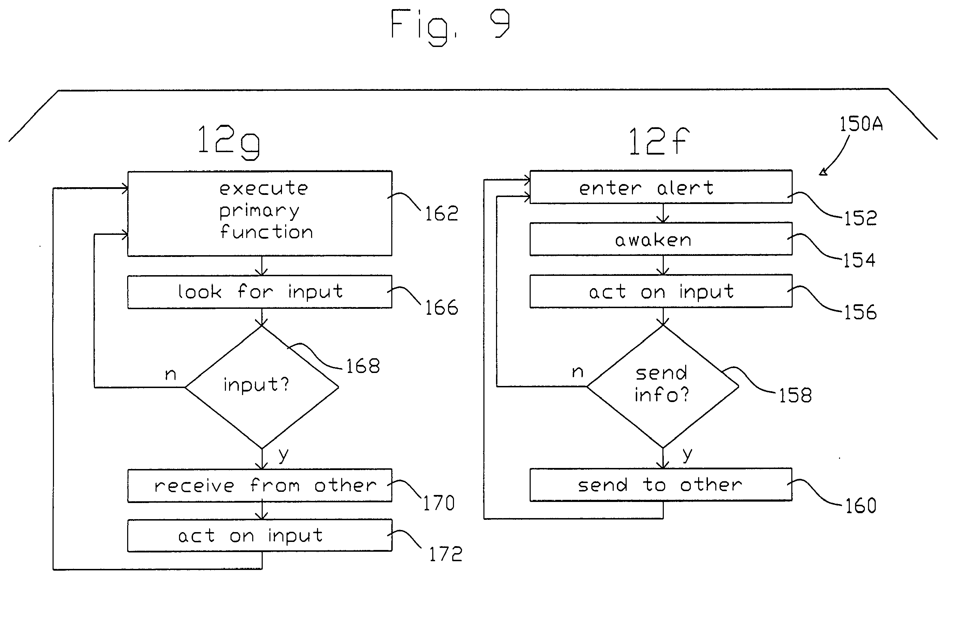

When a computer, such as computer 12g in Fig. 1 is executing code to accomplish its primary assigned task, the programmer may decide that occasional interaction between two computers, such as 12f and 12g is desirable. The programmer will have provided that the computer 12g occasionally pause to see if one or more of its neighbors has attempted a communication, as indicated in a "look for input" operation 166. If a communication is waiting as indicated by an "input?" decision operation 168, such as a write initiated by computer 12f to computer 12g, then computer 12g will complete the communication in a "receive from other" operation 170. If not, then computer 12g will return to the execution of its assigned function, as shown in Fig. 9 After the "receive from other" operation 170, computer 12g will act on the input received in an "act on input" operation 172. The programmer could have provided that computer 12g would be expecting instructions as in input, in which case computer 12g would execute the instructions. Alternatively, computer 12g might be programmed to be expecting data to act upon.

Following the "act on input" operation 172, computer 12g returns to its primary function; that is, it returns to the "execute primary function" operation 162. However, the possibility of even more complicated examples certainly exists. For instance, the programming might be such that certain inputs received from computer 12f will cause it to abort its previously assigned primary function and begin a new one, or else it might simply temporarily stop and await further input. As one skilled in the art will recognize, the various possibilities for action here are limited only by the imagination of the programmer.

It should be noted that, according to the embodiment of the invention described herein, a given computer 12 need not be interrupted while it is performing a task because another computer 12 is assigned the task of monitoring and handling inputs that might otherwise require an interrupt. However, it is interesting to note also that computer 12 which is busy handling another task also cannot be disturbed unless and until its programming provides that it look to its ports 38 for input. Therefore, it will sometimes be desirable to cause the computer 12 to pause to look for other inputs.

Illustrative of this invention is the operation of the PAUSE instruction. What is being described here is "cooperative multi-tasking" between several processors. A set of tasks resides on a node or nodes. PAUSE will sequentially examine all nodes or ports for incoming executable code. A wake-up or warm start is preceded by four no-ops (.... ). The PAUSE instruction ends by a return (;) instruction, then the next thread is polled. The last port examined uses two sets of four no-ops. A cold start occurs after a reset.

An edge processor 12a or corner processor 12f with input/output pin(s) 39 can also be polled by PAUSE, for example to perform a task by an external device 82. PAUSE can also be located in ROM as part of a start-up condition. An initiator routine will jump to pause and go to a four-point read of adjacent processors. Although the PAUSE function between multiple processors has been disclosed herein with reference to Forth, all of the concepts of the PAUSE function between multiple processors could be applied to other programming languages as well.

Since four instructions 52 can be included in an instruction word 48 and since, according to the present invention, an entire instruction word 48 can be communicated at one time between computers 12, this presents an ideal opportunity for transmitting a very small program in one operation. For example most of a small "For/Next" loop can be implemented in a single instruction word 48. Fig. 6 is a diagrammatic representation of a micro-loop 100. The micro-loop 100, not unlike other prior art loops, has a FOR instruction 102 and a NEXT instruction 104. Since an instruction word 48 (Fig. 4) contains as many as four instructions 52, an instruction word 48 can include three operation instructions 106 within a single instruction word 48. The operation instructions 106 can be essentially any of the available instructions that a programmer might want to include in the micro-loop 100. A typical example of a micro-loop 100 that might be transmitted from one computer 12 to another might be a set of instructions for reading from, or writing to the RAM 24 of the second computer 12, such that the first computer 12 could "borrow" available RAM 24 capacity.

The FOR instruction 102 pushes a value onto the return stack 28 representing the number of iterations desired. That is, the value on the T register 44 at the top of the data stack 34 is PUSHed into the R register 29 of the return stack 28. The FOR instruction 102, while often located in slot three 54d of an instruction word 48 can, in fact, be located in any slot 54. Where the FOR instruction 102 is not located in slot three 54d, then the remaining instructions 52 in that instruction word 48 will be executed before going on to the micro-loop 100, which will generally be the next loaded instruction word 48.

According to the presently described embodiment of the invention, the NEXT instruction 104 depicted in the view of Fig. 6 is a particular type of NEXT instruction 104. This is because it is located in slot three 54d (Fig. 4). According to this embodiment of the invention, it is assumed that all of the data in a particular instruction word 40 that follows an "ordinary" NEXT instruction (not shown) is an address (the address where the for/next loop begins). The opcode for the NEXT instruction 104 is the same, no matter which of the four slots 54 it is in (with the obvious exception that the first two digits are assumed if it is slot three 54d, rather than being explicitly written, as discussed previously herein). However, since there can be no address data following the NEXT instruction 104 when it is in slot three 54d, it can be also assumed that the NEXT instruction 104 in slot three 54d is a MICRO-NEXT instruction 104a. The MICRO-NEXT instruction 104a uses the address of the first instruction 52, located in slot zero 54a of the same instruction word 48 in which it is located, as the address to which to return. The MICRO-NEXT INSTRUCTION 104a also takes the value from the R register 29 (which was originally PUSHed there by the FOR instruction 102), decrements it by 1, and then returns it to the R register 29. When the value on the R register 29 reaches a predetermined value (such as zero), then the MICRO-NEXT instruction will load the next instruction word 48 and continue on as described previously herein. However, when the MICRO-NEXT instruction 104a reads a value from the R register 29 that is greater than the predetermined value, it will resume operation at slot zero 54a of its own instruction word 48 and execute the three instructions 52 located in slots zero through three, inclusive, thereof. That is, a MICRO-NEXT instruction 104a will always, in this embodiment of the invention, execute three operation instructions 106. Because, in some instances, it may not be desired to use all three potentially available instructions 52, a "no-op" instruction is available to fill one or two of the slots 54, as required.

It should be noted that micro-loops 100 can be used entirely within a single computer 12. Indeed, the entire set of available machine language instructions is available for use as the operation instructions 106, and the application and use of micro-loops is limited only by the imagination of the programmer. However, when the ability to execute an entire micro-loop 100 within a single instruction word 48 is combined with the ability to allow a computer 12 to send the instruction word 48 to a neighbor computer 12 to execute the instructions 52 therein essentially directly from the data bus 16, this provides a powerful tool for allowing a computer 12 to utilize the resources of its neighbors.

The small micro-loop 100, all contained within the single data word 48, can be communicated between computers 12, as described herein and it can be executed directly from the communications port 38 of the receiving compute12, just like any other set of instructions contained in a instruction word 48, as described herein. While there are many uses for this sort of "micro-loop" 100, a typical use would be where one computer 12 wants to store some data onto the memory of a neighbor computer 12. It could, for example, first send an instruction to that neighbor computer telling it to store a incoming data word to a particular memory address, then increment that address, then repeat for a given number of iterations (the number of data words to be transmitted). To read the data back, the first computer would just instruct the second computer (the one used for storage here) to write the stored data back to the first computer, using a similar micro-loop.

By using the micro-loop 100 structure in conjunction with the direct execution aspect described herein, a computer 12 can use an otherwise resting neighbor computer 12 for storage of excess data when the data storage need exceeds the relatively small capacity built into each individual computer 12. While this example has been described in terms of data storage, the same technique can equally be used to allow a computer 12 to have its neighbor share its computational resources - by creating a micro-loop 100 that causes the other computer 12 to perform some operations, store the result, and repeat a given number of times. As can be appreciated, the number of ways in which this inventive micro-loop 100 structure can be used is nearly infinite.

As previously mentioned herein, in the presently described embodiment of the invention, either data or instructions can be communicated in the manner described herein and instructions can, therefore, be executed essentially directly from the data bus 16. That is, there is no need to store instructions to RAM 24 and then recall them before execution. Instead, according to this aspect of the invention, an instruction word 48 that is received on a communications port 38 is not treated essentially differently than it would be were it recalled from RAM 24 or ROM 26. While this lack of a difference is revealed in the prior discussion, herein, concerning the described operation of the computers 12, the following more specific discussion of how instruction words 48 are fetched and used will aid in the understanding of the invention.

One of the available machine language instructions is a FETCH instruction. The FETCH instruction uses the address on the A register 40a to determine from where to fetch an 18 bit word. Of course, the program will have to have already provided for placing the correct address on the A register 40a. As previously discussed herein, the A register 40a is an 18 bit register, such that there is a sufficient range of address data available that any of the potential sources from which a fetch can occur can be differentiated. That is, there is a range of addresses assigned to ROM, a different range of addresses assigned to RAM, and there are specific addresses for each of the ports 38 and for the external I/O port 39. A FETCH instruction always places the 18 bits that it fetches on the T register 44.

In contrast, as previously discussed herein, executable instructions (as opposed to data) are temporarily stored in the instruction register 30a. There is no specific command for "fetching" an 18 bit instruction word 48 into the instruction register 30a. Instead, when there are no more executable instructions left in the instruction register 30a, then the computer will automatically fetch the "next" instruction word 48. Where that "next" instruction word is located is determined by the "program counter" (the P register 40c). The P register 40c is often automatically incremented, as is the case where a sequence of instruction words 48 is to be fetched from RAM 24 or ROM 26. However, there are a number of exceptions to this general rule. For example, a JUMP or CALL instruction will cause the P register 40c to be loaded with the address designated by the data in the remainder of the presently loaded instruction word 48 after the JUMP or CALL instruction, rather than being incremented. When the P register 40c is then loaded with an address corresponding to one or more of the ports 38, then the next instruction word 48 will be loaded into the instruction register 30a from the ports 38. The P register 40c also does not increment when an instruction word 48 has just been retrieved from a port 38 into the instruction register 30a. Rather, it will continue to retain that same port address until a specific JUMP or CALL instruction is executed to change the P register 40c. That is, once the computer 12 is told to look for its next instruction from a port 38, it will continue to look for instructions from that same port 38 (or ports 38) until it is told to look elsewhere, such as back to the memory (RAM 24 or ROM 26) for its next instruction word 48.

As noted above, the computer 12 knows that the next eighteen bits fetched is to be placed in the instruction register 30a when there are no more executable instructions left in the present instruction word 48. By default, there are no more executable instructions left in the present instruction word 48 after a JUMP or CALL instruction (or also after certain other instructions that will not be specifically discussed here) because, by definition, the remainder of the 18 bit instruction word following a JUMP or CALL instruction is dedicated to the address referred to by the JUMP or CALL instruction. Another way of stating this is that the above described processes are unique in many ways, including but not limited to the fact that a JUMP or CALL instruction can, optionally, be to a port 38, rather than to just a memory address, or the like.

It should be remembered that, as discussed previously herein, the computer 12 can look for its next instruction from one port 38 or from any of a group of the ports 38. Therefore, addresses are provided to correspond to various combinations of the ports 38. When, for example, a computer is told to fetch an instruction from a group of ports 38, then it will accept the first available instruction word 48 from any of the selected ports 38. If no neighbor computer 12 has already attempted to write to any of those ports 38, then the computer 12 in question will "go to sleep", as described in detail above, until a neighbor does write to the selected port 38.

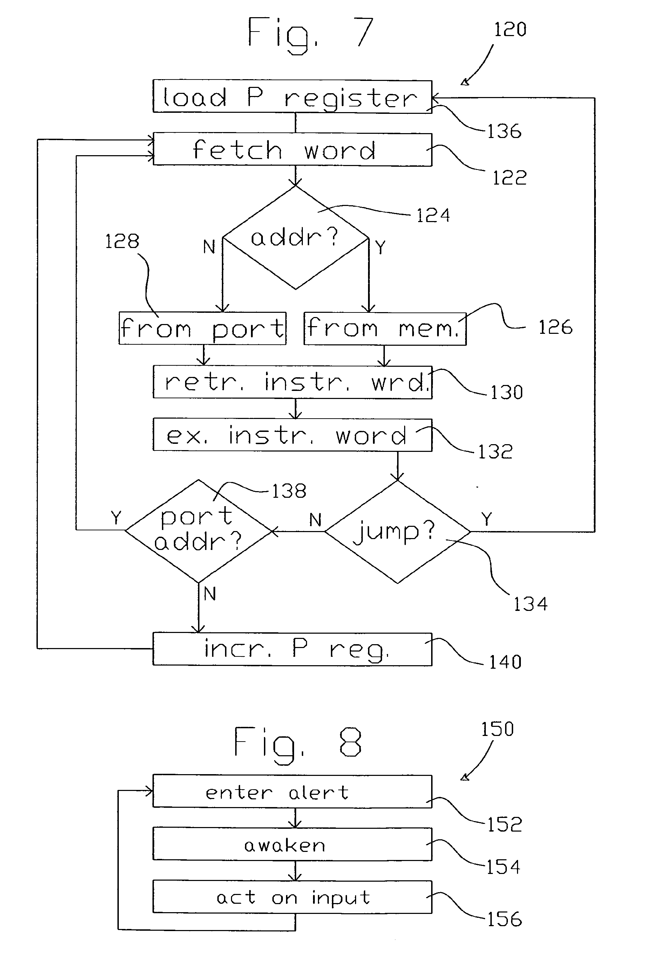

Fig. 7 is a flow diagram depicting an example of the above described direct execution method 120. A "normal" flow of operations will commence when, as discussed previously herein, there are no more executable instructions left in the instruction register 30a. At such time, the computer 12 will "fetch" another instruction word (note that the term "fetch" is used here in a general sense, in that an actual FETCH instruction is not used), as indicated by a "fetch word" operation 122. That operation will be accomplished according to the address in the P register 40c (as indicated by an "address" decision operation 124 in the flow diagram of Fig. 7. If the address in the P register 40c is a RAM 24 or ROM 26 address, then the next instruction word 48 will be retrieved from the designated memory location in a "fetch from memory" operation 126. If, on the other hand, the address in the P register 40c is that of a port 38 or ports 38 (not a memory address) then the next instruction word 48 will be retrieved from the designated port location in a "fetch from port" operation 128. In either case, the instruction word 48 being retrieved is placed in the instruction register 30c in a "retrieve instruction word" operation 130. In an "execute instruction word" operation 132, the instructions in the slots 54 of the instruction word 48 are accomplished sequentially, as described previously herein.

In a "jump" decision operation 134 it is determined if one of the operations in the instruction word 48 is a JUMP instruction, or other instruction that would divert operation away from the continued "normal" progression as discussed previously herein. If yes, then the address provided in the instruction word 48 after the JUMP (or other such) instruction is provided to the P register 40c in a "load P register" operation 136, and the sequence begins again in the "fetch word" operation 122, as indicated in the diagram of Fig. 7. If no, then the next action depends upon whether the last instruction fetch was from a port 38 or from a memory address, as indicated in a "port address" decision operation 138. If the last instruction fetch was from a port 38, then no change is made to the P register 30a and the sequence is repeated starting with the "fetch word" operation 122. If, on the other hand, the last instruction fetch was from a memory address (RAM 24 or ROM 26), then the address in the P register 30a is incremented, as indicated by an "increment P register" operation 140 in Fig. 7, before the "fetch word" operation 122 is accomplished.

The above description is not intended to represent actual operational steps. Instead, it is a diagram of the various decisions and operations resulting there from that are performed according to the described embodiment of the invention. Indeed, this flow diagram should not be-understood to mean that each operation described and shown requires a separate distinct sequential step. In fact many of the described operations in the flow diagram of Fig. 7 will, in practice, be accomplished generally simultaneously.

Fig. 8 is a flow diagram depicting an example of the inventive improved method for alerting a computer. As previously discussed herein, the computers 12 of the embodiment described will "go to sleep" while awaiting an input. Such an input can be from a neighboring computer 12, as in the embodiment described in relation to Figs. 1 through 5. Alternatively, as was also discussed previously herein, the computers 12 that have communication ports 38 that abut the edge of the die 14 can have additional circuitry, either designed into such computer 12 or else external to the computer 12 but associated therewith, to cause such communication port 38 to act as an external I/O port 39. In either case, the inventive combination can provide the additional advantage that the "sleeping" computer 12 can be poised and ready to awaken and spring into some prescribed action when an input is received. Therefore, this invention also provides an alternative to the use of interrupts to handle inputs, whether such inputs come from an external input device, or from another computer 12 in the array 10.

Instead of causing a computer 12 to have to stop (or pause) what it is doing in order to handle an interrupt, the inventive combination described herein will allow for a computer 12 to be in an "asleep but alert" state, as described above. Therefore, one or more computers 12 can be assigned to receive and act upon certain inputs. While there are numerous ways in which this feature might be used, an example that will serve to illustrate just one such "computer alert method" is illustrated in the view of Fig. 8 and is enumerated therein by the reference character 150. As can be seen in the view of Fig. 8, in an "enter alert state" operation 152, a computer 12 is caused to "go to sleep" such that it is awaiting input from an neighbor computer 12, or more than one (as many as all four) neighbor computers or, in the case of a "edge" computer 12 an external input, or some combination of external inputs and/or inputs from a neighbor computer 12. As described previously herein, a computer 12, can "go to sleep" awaiting completion of either a read or a write operation. Where the computer 12 is being used, as described in this example, to await some possible "input", then it would be natural to assume that the waiting computer has set its read line 18 high awaiting a "write" from the neighbor or outside source. Indeed, it is presently anticipated that this will be the usual condition. However, it is within the scope of the invention that the waiting computer 12 will have set its write line 20 high and, therefore, that it will be awakened when the neighbor or outside source "reads" from it.

In an "awaken" operation 154, the sleeping computer 12 is caused to resume operation because the neighboring computer 12 or external device 39 has completed the transaction being awaited. If the transaction being awaited was the receipt of an instruction word 48 to be executed, then the computer 12 will proceed to execute the instructions therein. If the transaction being awaited was the receipt of data, then the computer 12 will proceed to execute the next instruction in queue, which will be either the instruction in the next slot 54 in the present instruction word 48, or else the next instruction word 48 will be loaded and the next instruction will be in slot 0 of that next instruction word 48. In any case, while being used in the described manner, then that next instruction will begin a sequence of one or more instructions for handling the input just received. Options for handling such input can include reacting to perform some predefined function internally, communicating with one or more of the other computers 12 in the array 10, or even ignoring the input (just as conventional prior art interrupts may be ignored under prescribed conditions). The options are depicted in the view of Fig. 8 as an "act on input" operation 156. It should be noted that, in some instances, the content of the input may not be important. In some cases, for example, it may be only the very fact that an external device has attempted communication that is of interest.

If the computer 12 is assigned the task of acting as an "alert" computer, in the manner depicted in Fig. 8, then it will generally return to the "asleep but alert" status, as indicated in Fig. 8. However, the option is always open to assign the computer 12 some other task, such as when it is no longer necessary to monitor the particular input or inputs there being monitored, or when it is more convenient to transfer that task to some other of the computers 12 in the array.

One skilled in the art will recognize that this above described operating mode will be useful as a more efficient alternative to the conventional use of interrupts. When a computer 12 has one or more of its read lines 18 (or a write line 20) set high, it can be said to be an "alert" condition. In the alert condition, the computer 12 is ready to immediately execute any instruction sent to it on the data bus 16 corresponding to the read line or lines 18 that are set high or, alternatively, to act on data that is transferred over the data bus 16. Where there is an array of computers 12 available, one or more can be used, at any given time, to be in the above described alert condition such that any of a prescribed set of inputs will trigger it into action. This is preferable to using the conventional interrupt technique to "get the attention" of a computer, because an interrupt will cause a computer to have to store certain data, load certain data, and so on, in response to the interrupt request. By contrast, according to the present invention, a computer can be placed in the alert condition and assigned the task of awaiting an input of interest, so that no instruction periods are wasted in beginning execution of the instructions provided by the input. Again, note that in the presently described embodiment, computers in the alert condition will actually be "asleep but alert", meaning that they are "asleep" in the sense that they are using essentially no power, but "alert" in that they will be instantly triggered into action by an input. However, it is within the scope of this aspect of the invention that the "alert" condition could be embodied in a computer even if it were not "asleep". The described alert condition can be used in essentially any situation where a conventional prior art interrupt (either a hardware interrupt or a software interrupt) might have otherwise been used.

Although the invention is not limited by this example, the present computer 12 is implemented to execute native Forth language instructions. As one familiar with the Forth computer language will appreciate, complicated Forth instructions, known as Forth "words" are constructed from the native processor instructions designed into the computer. The collection of Forth words is known as a "dictionary". In other languages, this might be known as a "library". As will be described in greater detail hereinafter, the computer 12 reads eighteen bits at a time from RAM 24, ROM 26 or directly from one of the data buses 16 (Fig. 2). However, since in Forth most instructions (known as operand-less instructions) obtain their operands directly from the stacks 28 and 34, they are generally only five bits in length such that up to four instructions can be included in a single eighteen-bit instruction word, with the condition that the last instruction in the group is selected from a limited set of instructions that require only three bits. Also depicted in block diagrammatic form in the view of Fig. 3 is a slot sequencer 42. In this embodiment of the invention, the top two registers in the data stack 34 are a T register 44 and an S register 46.

The method includes the use of forthlets. Forthlets is a term coined to combine applets and Forth - although that is not an exact description. Forth is a computer programming language developed in the early 1970s. Forthlets are wrappers around code, and so the code can be treated as data. An alternative definition would be that a forthlet is a string of machine executable code surrounded by a wrapper. The wrapper may consist of a header and a tail or a header alone.

Forthlets are the parts and the tools that support parallel programming of the Scalable Embedded Array style parallel processors. Forthlets have some of the properties of files. Their properties include names, type, address, length, and various further optional type fields described later. Forthlets are a wrapper for things constructed from source code or templates by tools or the compiler. Forthlets are wrappers for code and data and can also wrap other forthlets. Forthlets are the mechanism for distributing programs and data and assisting in the construction and debugging of programs.

These hardware functions provide simple and fast remote procedure calls and mutexs. Mutex is a common name for a program object that negotiates mutual exclusion among threads for this reason a mutex is often called a lock. One of the properties of the scalable embedded array processors that make them suited for simple parallel programs are that they are connected by hardware channels that synchronize processors and processes by putting a processor in to an ultra-low power sleep state until a pending message exchange is complete.

One property of the software the invention uses in the above environment is that it uses the traditional Forth style cooperative multitasker in the classic fashion to multitask each processor between execution of programs in its local memory space and programs streamed to its execution channels. This, in combination with the multi-port address select logic in the hardware, provides for a simple combination of parallel hardware and software and makes the transition from multitasking programming to true parallel multiprocessing programming easy.

A second property is that these synchronized communication channels are in the same places in the address spaces of the processors and can be used for data reads and writes using pointers or can be executed by being branched to or called and read by a processors program counter.

A third property is that multiple communication channels can be selected for a read or write by the processor as individual bits in the addresses in the address range of these communication ports select individual channels.

A boot forthlet is a wrapper for a whole application. This is different from conventional computer operation as typified by the conventional x86 processor. In conventional microprocessors instructions are first written in a high level computer language such as C++ or C# called source code. The source code is then converted into machine language also called object code. This conversion process is referred to as compilation and the programs or machines which accomplish this process are called compilers. The object code is then executed by the processor. In contrast the forthlets are directly executable. This invention is not however limited to directly executable forthlets since the same process and function can be accomplished by compiling high level commands into machine code which performs all of the processes of forthlets.

A boot forthlet is the most basic type of forthlet it is executable with no branches. The next most complex type of forthlet a stream executable forthlet includes a call, the call puts an address on return stack 28. When a call is made the address in the PC is pushed to the return stack. In memory PC will have been pre-incremented so it always points to the next sequential instruction in memory following the call. So when a return instruction returns to the address on the stack it returns to the opcode that follows the call. Below is an example of a low level forthlet written in machine Forth This forthlet is a simple one word port executable Forthlet

### Example 1

### target

Forthlet port-forthlet
!p+ !p+ @p+ @p+
Fend

The first line sets up the environment and the second line declares the program name as port-forthlet. The third line sends the top two stack items to the port this is running on then reads two stack items back from that port. The forthlet then goes back to sleep on the port waiting for someone to write the next Forthlet to this port. The final line wraps up the Forthlet and puts it on the server so that name port-forthlet returns the address of that packet.

When a call is made from a port the address in the PC will be the port. Port addresses don't get auto-incremented instead they wait for some other processor to rewrite the port, the address doesn't increment, they read the same port address again and sleep until the port is written. So if code running in a port calls a different port or calls RAM or ROM then the return address of the port that makes the call would be placed on the return stack when the call is made. When a return instruction happens it will return to the calling port because that is the address that will go back into the PC.

The third type of forthlet is a memory executable forthlet. A memory executable forthlet uses either a boot forthlet or a stream executable forthlet as a wrapper. A memory executable forthlet may for example, occupy memory node 0 address 0 (rev 7 node 0, rev 9 $200). A memory executable Forthlet runs at a given address in memory. It might run at address 0 or 1 or $D or $34 on any node. It might run on node 0 or node 1 or node 2.

A fourth type of forthlet is a node executable forthlet. A node executable forthlet also uses either a boot forthlet or a stream executable forthlet as a wrapper. A node executable forthlet will run from any node. A node executable forthlet looks at the situs of memory.

The fifth type of forthlet, a variable executable address forthlet, also uses either a boot forthlet or a stream executable forthlet as a wrapper. A variable executable address forthlet operates from a variable node.

Example 2 illustrates a forthlet which includes direct port stream opcode execution.

### Example 2

### target

$14 org : dosample \ getbit is a routine in ram
\ if it hasn't been defined previously
\ give the word getbit meaning

### forthlet call-from-stream

[$12345]# dosample
fend

This example compiles a forthlet called "call-from-stream" it starts with a literal load that when executed will load the literal $12345 into T then call the subroutine called "dosample". A literal load instruction, a sample, and a call to a subroutine in RAM are wrapped in this forthlet and if written to a node will cause it to execute the load, and perform the call to the routine in RAM. When that routine returns it will return to the port(s) that called it for more code.

Direct port stream opcode execution, provides access to the 5-bit instructions that represent most of the primitive operations in the Forth language and that are inlined into programs by the compiler. These forthlets are streamed to a processors communication channel and executed word by word. They do not have branches and are not address or node specific in nature. These forthlets form phrases that glue other forthlets, as data, into messages. The program counter remains at an address that selects a port, and it not incremented after a word containing up to four c18 opcodes is executed. After completing the execution of a streamed code word a processor will go to sleep until the next streamed instruction word arrives. Most often this type of forthlet will end with a return instruction which will return execution to the routine that called the port, possibly the PAUSE multitasker.

Example 3 illustrates a forthlet which includes port execution of code stream with calls to code in RAM/ROM.

### Example 3

### target

forthlet ram-based-spi-driver
5 node! \ specify this is for node 5 only
0 org \ this resides at address 0 on node 5
: spi-code
ordinary-code
fend

This example specifies a forthlet named "ram-based-spi-driver" that will have code that that will require the pins unique to node 5 and must reside there in use. It is also bound to a specific address as specified by the words defined inside of it. The word "spi-code" will compile a call to address 0. The code will be loaded and executed at address 0 on node 5 when this forthlet is run.

Streamed Forthlets can include calls to routines in ROM or RAM. The addresses of the routine to be called are generated from their names by the compiler. Routines in RAM must be loaded before they can be called. If a routine in RAM or ROM is called from a port then most likely the processor delivering the instruction stream will offer the next streamed word for execution in the port and go to sleep while the processor is executing the called routine in RAM or ROM. Routing of messages involves sending port executable streams that wake up processors and have them call their routing word in ROM. These words in turn read more of the instruction stream and then route the stream on to the next processor towards its destination.

Example 4 illustrates a start of ram execution forthlet.

### Example 4

target
forthlet0 runs-on-ram-server
ordinary-code other-forthlet-execution etc.
fend

This forthlet is designed to execute on node 0 at address 0 and can be loaded and executed on node 0 by passing the address of the "runs-on-ram-server" forthlet to an "X0" command call. Applications that are packaged for loading from and use of external RAM from on the RAM server are packaged as Forthlet0 type forthlets by the command. Applications can also be put in other format such as those required to load from SPI or asynchronous serial interfaces when they differ from the format used on the RAM server. This type of forthlet is a program that sits at the bottom of RAM. After being loaded into the bottom of ram, up to some address, it is executed. Because ram execution forthlets run in RAM they may have branch instructions and may jump to, call, or return to addresses in RAM, ROM or communication ports. These forthlets are like .com executable files in DOS. They start at the beginning of memory and have a length. They are loaded and executed. They can be called again later after they have been loaded.

Example 5 illustrates a loaded forthlet loaded or loaded and run at other RAM addresses, code or data overlays.

### Example 5

### target

0 node!
forthlet ram-based-anynode
0 org
: do-something
ordinary-code
fend

This example specifies code that is to run at address 0 but which is not bound inside of the forthlet wrapper to any particular node. It could run at address 0 on any node.

These loaded forthlets are for code and data overlays. Code or data can be loaded at any address on a node. The same code might be loaded to a range of address on a number of nodes and if that address was the start of RAM they could be a ram execution forthlet similar to that of figure 8. When code or data is loaded to an address other than the start of RAM it may sometimes be used with code or data at the start of memory. A number of often used subroutines in an program might be loaded into high memory and called by different overlayed code routines in low memory. As easily code can be loaded into low memory and left there to be repeatedly called by overlays of code loaded into high memory. One example of this might be a usage where the same code would be placed at the same address on a number of nodes but each node in a group would get an overlay of unique data at the addresses setup for data manipulation by the code.

### Example 6 illustrates a forthlet bound to a specific node.

### Example 6

target
forthlet0 runs-on-ram-server
ordinary-code other-forthlet-execution etc.
fend

This forthlet is designed to execute on node 0 at address 0 and can be loaded and executed on node 0 by passing the address of the "runs-on-ram-server" forthlet to an "X0" command call. Applications that are packaged for loading from and use of external RAM from on the RAM server are packaged as Forthlet0 type forthlets by the command.

Example 7 illustrates an IO circuit specific forthlet.

### Example 7

### target

0 node!
forthlet2p ram-based-sync-serial-driver
0 org
: sync-code
ordinary-code
fend

This example creates a forthlet that will be bound to the requirement that the node it runs on has at least two pins. This is typical of an IO node. Nodes with zero, or one pin could not run this forthlet because it will need to read and write the pin read in bit-17 and the pin read in bit-1 of the IOCS register.

These forthlets contain code that reads or writes IO circuits unique to certain nodes. Physical circuits like SPI connections, A/D, D/A, or reset circuits have software drivers that are only appropriate for nodes that have the matching io hardware properties to run these Forthlets.

X0 forthlets, execute on zero, such native forthlets run on the RAM server, node 0. These forthlets function most like the regular programs in most systems in that they are programs loaded directly from external memory and executed by the CPU that read them from external memory. Some processors read and execute one word at a time from memory, and some read blocks of external memory into a local cache memory before they execute them. These forthlets are helpful in hardware that does not map the local address of cached memory to the external memory address transparently so that the processor just sees that it is executing the external memory, but from a cache. This forthlet will explicitly load the code from external memory into a local memory by running a program already in RAM or ROM and then we branch to the code already loaded. Any node can send a message to node 0, the RAM server, and give it the address of a native forthlet to load and execute at the start of local RAM on the RAM server. Any processor can simply put an address on its stack and call the X0 function and an X0 message will be sent to the RAM server through the RAM Server Buffer node to execute the forthlet at that address on the RAM server. What happens then depends on the contents of the native forthlet executed on the server.

The most basic data transfer forthlet is fsend. The process of loading and executing a native Forthlet on the RAM Server involves calling a routine in the ROM BIOS, or in RAM, that reads from the external memory and it is used to load x0 forthlets into its local RAM for execution. Forthlets running on the RAM server load other forthlets from external memory but send them to pipes. Port executable forthlet phrases are combined with memory executable forthlets to transfer data, which might also be forthlets, from one location to another. Drivers for sending data on or off chip via some protocol such as SPI or 12C or through wireless software link handle transfer of data on and off the chip, and data transfer forthlets handle moving data between nodes on the chip. The compiler can organize an application to run out of the external memory via the RAM server, or from an SPI port connected to a serial flash, or from a PC development system sent down a serial link to the processor. Applications that need sufficient external memory to warrant using node 0 as the RAM Server connected to a wide external RAM, ROM, or Flash device will rely on applications being packaged into Forthlets on the RAM server by the compiler. Through the use of the above Forthlet types applications cooperate, load code overlays, and exchange data with one another and the RAM Server. Events can wake up peripheral processor nodes and they can process data in cooperation with other nodes that get awakened.

Example 9 illustrates a relocatable forthlet not bound to a specific node.

### Example 9

### target

0 node!
0 org
forthletr ram-based-relocatable-word
: mycode
if .... then ....
mycode -;
begin .... until ....
ordinary-code
fend

This example has a forthlet that is not bound to a node but which has branching internally that is address dependent. When loaded to a specific address the branch fields of the branches are set to relocate the routine to run at a specific address.

These forthlets run from memory and may include branch instructions. But they can be messaged when loaded on a node to be relocated to a different execution address as needed. These provide a mechanism similar to a DLL where some combination of callable functions can be arranged differently at runtime and still safely call compiler forthlets. The compiler can assist in the construction of forthlets by combining different primitive forthlet types to provide more complex functionality. Streaming forthlet phrases are combined by the compiler with other already compiled forthlets to provide safe construction of more complex forthlet types. The compiler and the programmer can assign forthlet properties to forthlets that make more sophisticated object manipulations possible. These also provide the programmer with tools that produce forthlet objects with mathematically provable properties so assist in safe program construction.

A send forthlet is constructed for the programmer by the compiler. It is the type of forthlet that will cause another forthlet to be sent from one location to another using specified route. The programmer constructs a send type forthlet using the command FSEND as illustrated in example 10.

### Example 10

### dataforthlet myroute fsend myforthlet

This phrase creates a new send type forthlet named "myforthlet" which when executed would cause "dataforthlet" to be sent down the route described by the route-descriptor "myroute." The compiler will allow a route descriptor to be built by describing a route as a series of steps, tracing it out, or by specifying the starting and ending nodes.

Figure 13 illustrates a run forthlet. A run forthlet is constructed for the programmer by the compiler. It is the type of forthlet that will cause a ram execution forthlet to be sent from one location to another using specified route and then executed from the start of RAM. The programmer constructs a run type forthlet using the command FRUN as illustrated in example 11.

### Example 11

### app2 route1-21 frun run-app2

This phrase creates a new run type forthlet named "run-app2" which when executed would cause "app2" to be sent down the route described by the route-descriptor "route1-21."

A number of forthlets are similar to a send forthlet. A get forthlet is like a send forthlet in reverse. It opens a route and pulls a forthlet rather than sends a forthlet in the pipe that it opens. A broadcast forthlet is constructed by the compiler to send one forthlet to multiple locations. Collect and gather forthlets are constructed by the compiler to collect or gather data from multiple locations to a single location. Distribute Forthlets are constructed by the compiler to distribute parts of a collection of data from one location to multiple locations.

In addition to the above simple forthlets there are a number of midlevel forthlet objects. Midlevel forthlet objects are forthlets that have object properties set the by the programmer and compiler and used by higher level forthlets to assist the programmer. Example 12 illustrates a template forthlet.

### Example 12

Target
0 node!
0 org
Forthletr clipper \ clip data stream to unsigned fmax#
ioport# !a \ specify an unset input output port address
fmax# . \ specify an unset maximum value for clipping
: clip
... \ could be coded many ways
@b Cntmsg# and. \ specify an unset port for control messages
clip -;
Fend

This example shows the definition of a data clipper as a relocatable Forthlet. The use of the names "ioport#" and "fmax#" and "Cntmsg#" designate that this Forthlet has three fields with relative addresses inside of the Forthlet that will contain instance variables when the template is instantiated. The use of those names in a relocatable Forthlet tells the compiler that copies of this Forthlet can be made, relocated to any node and any address in memory in which it fits, and has three fields with known properties to be instantiated. The compiler recognizes these keywords when building a relocatable Forthlet and knows that the "ioport#" field contains the combined address of two neighbors from which and two data samples will be read and written by this Forthlet. The content that fields will be set to the combined addresses of the two ports to the appropriate neighbors when an instance of this program is placed into a position in an array to process data samples in a real program.

The compiler also knows that the "Cntmsg#" field specifies the address of the port that will be checked for incoming control messages and that the "fmax#" field contains a value which is the maximum value that will be passed in the stream by this clipper. The compiler will determine that this Forthlet also has the property that it requires three ports, so it could not be placed on a corner node with only two ports. Software can thus place templated programs into an array in a way such that one can prove mathematically that the message and control paths through each node of the array are correct and that no flow deadlocks exist.

A template forthlet is a type of executable forthlet with properties that are associated with the kind of template that it is. These object property fields tell the compiler and the programmer what is the generic function of the forthlet and the properties that it has that can be safely manipulated. An example would be a fir filter element template. A multistage fir filter can be constructed on a working group of nodes where each node performs part of the filter function. The total filter function is determined by the specific settings on each stage of the cascaded filter elements. The code in each filter element is identical except for the delays for the tap feedbacks, the constants used to multiply the data fed back at each tap, and the ports on which data is read in and written out to the next filter stage. A template forthlet would consist of this code with specification of where the parameters that can be manipulated are and what they represent.

Many problems lend themselves into solution through the use of pre-defined function templates that are mapped by the compiler to function in a safe way. These properties can also be represented graphically to the programmer to assist with visualization an design and to confirm the correctness of designs. Higher level forthlets will use these template forthlet property fields to ensure that modules are construction with parts that match neighboring modules to prevent the construction of code where modules connect in a way that would allow deadlocks.

High level forthlets are also called forthlet wizards can be as high-level as desired. They are part of the compiler and assist the programmer in the design, construction, and verification of code. They use the object properties of forthlets to build objects for the programmer. There are some forthlet wizards in the forthlet library and there is documentation alternately a forthlet wizard can be used to help in the construction of new forthlet wizards.

In the previous example of a FIR filter template forthlet a filter builder wizard forthlet can accept a high-level description of a filter and perform the calculations needed to determine the delays, taps, constants, and port directions needed for each node to create a parallel distributed multi-stage FIR Filter on a group of nodes. It could instantiate the FIR Filter Forthlet Template for each node and add a forthlet wrapper needed to load and launch the software on the whole working group of nodes.

The above wizards can assist in the construction of analog component objects, R/F component objects including transmitters, receivers, filters, protocol translators, or anything else added to the library.

A diagnostic forthlet executes on a processors port and returns a complete view of the state of that processor, or any specific information about its state, to some other location such as to a development system on a PC, or even over a radio link to a remote destination.

The forthlet interpreter is very much like a conventional Forth system in that it would execute forthlets from a list of forthlet addresses. The lists could reside in external memory and one address would be read from the list at a time. This address would then be executed on the RAM Server with an X0. The inner details would very much resemble a conventional threaded Forth system. A branch would reset the forthlet Interpreter pointer etc. ram execution. A forthlet interpreter that operates this way lets one write very large programs that operate as if from a very large address space just like a conventional processor. The size of Forth words would not be limited by the size of the memory on one of our local nodes but rather by the size of the external memory. The use of a forthlet Interpreter will allow us to do many things at Runtime that we have previously described as happening at compile time. The smart things that the compiler can do with building and distributing forthlets could then optionally be done at runtime. An example would be a dynamic filter builder type program that runs on the embedded chip at runtime in order to take advantage of how that allows compression of the forthlet code loaded and run on distributed processors. A template and an instantiation program included as a runtime Forthlet Interpreter object might be smaller than a complete set of instantiated nodes where the filter element is duplicated each time.

A dynamic forthlet dispatcher is a high level forthlet. dynamic runtime load balance may be achieved for some applications by using a forthlet that does dynamic dispatching of executable forthlets and forthlet working groups based on the number of available nodes at that moment, or on the number of chips that are networked together using physical or R/F links.

High level forthlets can also act as visualization tools and profilers. High-Level forthlets can examine the object properties of compiled forthlets and provide helpful visualizations of distribution, utilization, and efficiency of applications. The visualization tools and profifers can include a fully interactive environment that behaves as a traditional Forth command interpreter running on every core with the ability to interact with the processors and code on a live basis. This has been a traditional strength for Forth often eliminating the need for cumbersome and obtrusive in-circuit emulation hardware being needed to quickly debug applications.

While specific examples of the inventive computer array 10 and computer 12 have been discussed therein, it is expected that there will be a great many applications for these which have not yet been envisioned. Indeed, it is one of the advantages of the present invention that the inventive method and apparatus may be adapted to a great variety of uses.

All of the above are only some of the examples of available embodiments of the present invention. Those skilled in the art will readily observe that numerous other modifications and alterations may be made without departing from the spirit and scope of the invention. Accordingly, the disclosure herein is not intended as limiting and the appended claims are to be interpreted as encompassing the entire scope of the invention.

### INDUSTRIAL APPLICABILITY

The inventive computer array 10, 10a and associated method are intended to be widely used in a great variety of computer applications. It is expected that it they will be particularly useful in computer intensive applications wherein a great number of different but related functions need to be accomplished. It is expected that some of the best applications for the inventive computer array 10, 10a, and associated method, will be where the needed tasks can be divided such that each of the computers 12 has computational requirements which are nearly equal to that of the others. However, even where some of the computers 12 might sometimes, or even always, be working at far less than their maximum capabilities, the inventor has found that the overall efficiency and speed of the computer array 10, 10a will generally exceed that of prior art computer arrays wherein tasks might be assigned dynamically.

It should be noted that there might be many applications wherein it would be advantageous to have more than one of the computer arrays 10, 10a. One of many such possible examples would be where a digital radio might require a GPS input. In such an example the radio might be implemented by one computer array 10, which receives input from a separate computer array 10 configured to accomplish the function of a GPS.

It should further be noted that, although the computers 12 may be optimized to do an individual task, as discussed in the examples above, if that task is not needed in a particular application, the computers 12 can easily be programmed to perform some other task, as might be limited only by the imagination of the programmer.

It is anticipated that the present inventive computer array 10, 10a will best be implemented using the Forth computer language, which is inherently segmented to readily divide tasks as required to implement the invention. Color Forth is a recent variation of the Forth language which would be equally applicable.

Since the computer array 10, 10a and computer array method 36 of the present invention may be readily produced and integrated with existing tasks, input/output devices, and the like, and since the advantages as described herein are provided, it is expected that they will be readily accepted in the industry. For these and other reasons, it is expected that the utility and industrial applicability of the invention will be both significant in scope and long-lasting in duration.

### COMPONENT LIST

- 10: computer array
- 12: computer
- 12a: memory controller computer
- 14: die
- 16: data line
- 18: flash memory
- 20: RAM
- 22: serial data line
- 24: parallel data bus
- 26a: through 26p input/output circuits
- 28: processor
- 30: ROM
- 32: computer RAM
- 34: computational core
- 36: computer array method
- 38: provide interconnected computers
- 40: configure computers for tasks
- 42: assign tasks to computers
- 44: initialize computers

## Claims

1. A computer array system, comprising:
a plurality of computers; and,
a plurality of data paths connecting said computers; and,
a mechanism for distributing programs and data between one of said plurality of computers and another one of said plurality of computers.

2. The computer array system of claim 1, wherein:
said mechanism is further comprising a wrapper for instructing at least one of sad plurality of computers as to what action to take when said wrapper encounters said one of said plurality of computers.

3. The computer array system of claim 2, wherein:
said wrapper instructs said one of said at least some of the computers to load data following said wrapper.

4. The computer array system of claim 2, wherein:
said wrapper instructs said one of said at least some of the computers to load instructions following said wrapper.

5. The computer array system of claim 2, wherein:
said wrapper instructs said one of said at least some of the computers to transmit said carrier to another of said computers.

6. The computer array system of claim 2, wherein:
said wrapper is directly executable at a port..

7. The computer array system of claim 2, wherein:
said wrapper is directly executable at a port.

8. The computer array of system claim 2, wherein:
said wrapper includes a call wherein the call puts an address on the return stack, then returns.

9. The computer array of claim 2, wherein: said wrapper further comprises a counter for indicating the length of said wrapper.

10. The computer array of claim 1, wherein:
the computers are physically arrayed in a 5 by 5 array.

11. The computer array of claim 1, wherein:
at least some of the computers are physically arrayed in a 4 by 6 array.

12. The computer array of claim 1, wherein:
the quantity of computers along each side of the array is an even number.

13. The computer array of claim 1, wherein:
at least one of the computers is in direct communication with an external memory source.

14. The computer array of claim 1, wherein:
at least one of the computers communicates data from an external memory source to at least some of the plurality of computers.

15. A method for performing a computerized job, comprising:
providing a plurality of computers; and
assigning a different task to at least some of the computers.

16. The method of claim 15, wherein:
at least one of the computers is assigned to communicate with a flash memory.

17. The method of claim 15, wherein:
at least one of the computers is assigned to communicate with a random access memory.

18. The method of claim 15, wherein:
at least one of the computers is assigned to accomplish an input/output function.

19. The method of claim 15, wherein:
one of the computers routes assignments to the remainder of the computers.

20. A computer array, comprising:
a plurality of computers; and
a plurality of data connections between the computers; wherein
at least some of the computers are programmed to perform different functions.

21. The computer array of claim 20, wherein:
the different functions work together to accomplish a task.

22. The computer array of claim 20, wherein:
each of the functions is programmed into the respective computers when the computer array is initialized.

23. The computer array of claim 20, wherein:
communication between the computers is asynchronous.

24. A method for accomplishing a task using a plurality of computers, comprising:
dividing a task into operational components and assigning each of the operational components to one of the computers;
programming at least some of the computers to accomplish each of the operational components.

25. The method for accomplishing a task of claim 24, wherein:
the operational components are operations used in accomplishing a global positioning system receiver.

26. The method for accomplishing a task of claim 24, wherein:
before the task is begun, programming the computers to accomplish each of the operational components.

27. The method for accomplishing a task of claim 24, wherein:
the computers are arranged in a computer array.
